# EUROPEAN PATENT SPECIFICATION

(11) **EP 1 825 753 B1**
(45) Date of publication and mention of the grant of the patent: **05.03.2014**
(21) Application number: 07011765.0
(22) Date of filing: 25.04.2001
(51) Int. Cl.: A01N 47/36, A01N 57/20, A01N 25/22, A01P 13/00, A01N 25/30, A01N 25/12, A01N 25/08

(54) **Stabilisation of solid herbicidal compositions comprising flazasulfuron**
Stabilisierung fester herbizider Zusammensetzungen, die Flazasulfuron enthalten
Stabilisation de compositions solides herbicides comprenant du flazasulfuron

(30) Priority: 26.04.2000 JP 2000125475
(43) Date of publication of application: 29.08.2007
(62) Divisional of application: 01925914.2
(73) Proprietor: ISHIHARA SANGYO KAISHA, LTD., Osaka-shi, Osaka 550-0002 (JP)
(72) Inventor: Maeda, Masaru, Kusatsu-shi Shiga 525-0025 (JP); Shimizu, Manabu, Kusatsu-shi Shiga 525-0025 (JP)
(74) Representative: Ward, David Ian

(56) References cited:
- EP-A- 0 462 585
- EP-A- 0 480 679
- EP-A- 0 764 404
- JP-A- 8 283 108
- JP-A- 10 158 111
- DATABASE WPI Week 199346 Thomson Scientific, London, GB; AN 1993-365099 XP002503437 -& JP 05 271021 A (ISHIHARA SANGYO KAISHA LTD) 19 October 1993 (1993-10-19)

## Description

### TECHNICAL FIELD

The present invention relates to the use of magnesium oxide as a stabilizer to inhibit hydrolysis of flazasulfuron in a solid herbicidal composition, comprising (1) 1-(4,6-dimethoxypyrimidin-2-yl)-3-(3-trifluoromethyl-2-pyridylsulfonyl)urea (common name: flazasulfuron) or a salt thereof, (2) N-(phosphonomethyl)glycine (common name: glyphosate), and/or salts thereof (3) a surfactant, and (4) magnesium oxide.

### BACKGROUND ART

EP-A- 0 462 585 discloses a herbicidal composition comprising flazasulfuron and either glufosinate or bilanafos. Specific formulations may include further ingredients according to custom, which may include solid carrier(s) and/or surfactant(s).

JP-A- 8 283 108 discloses stabilisation of a herbicidal composition comprising a sulfonylurea herbicidal compound and at least one other herbicide, by addition of basic white carbon.

JP 10 158111 discloses an agrochemical preparation comprising a sulfonylurea-based herbicide and basic silica, which is formed into granular cores. A liquid agrochemical is added into these cores, which are then coated with powdered calcium oxide.

EP-A- 0 764 404 discloses a granular herbicidal composition comprising flazasulfuron (or a salt thereof), a chemical stabilizer (including at least one compound selected from dialkylsulfosuccinates and benzoates), and a carrier (e.g. slaked lime, calcium carbonate, talc, white carbon, etc). The composition may also optionally include one or more other ingredients, which may include active herbicidal ingredients.

JP-A-5-2711021 discloses an improved herbicidal composition, comprising, as active ingredients, flazasulfuron or a salt thereof and at least one member selected from the group consisting of glyphosate, glufosinate, bilanafos and salts thereof, to which an inorganic magnesium salt is added. In the herbicidal composition, the inorganic magnesium salt is added so that the active ingredients in a spray liquid is stabilized, the acidity of the spray liquid is improved, and the hygroscopicity of the formulation is inhibited when the improved herbicidal composition is diluted with water and sprayed. JP-A-5-9101 discloses an agricultural composition, comprising a) an agricultural active ingredient, b) a surfactant, c) a carbonate, d) a solid acid and e) boric anhydride and/or metaboric acid. In the agricultural composition, boric anhydride and/or metaboric acid is added so that generation of carbon dioxide accompanied with the reaction between the carbonate and the solid acid during storage of the agricultural composition is inhibited. Thus, the background arts neither disclose nor suggest the present invention, that is, the solid herbicidal composition in which storage stability of flazasulfuron is obtained by a specific stabilizer.

The present inventors have studied to find a herbicidal composition which comprises, as active ingredients, flazasulfuron or a salt thereof and glyphosate, and/or salts thereof and has an excellent storage stability of flazasulfuron, to thereby complete the present invention.

### DISCLOSURE OF THE INVENTION

Specifically, the present invention relates to the use of magnesium oxide as a stabilizer to inhibit hydrolysis of flazasulfuron in a solid herbicidal composition, comprising (1) flazasulfuron or a salt thereof, (2) glyphosate and/or salts thereof, (3) a surfactant, and (4) magnesium oxide.

Any salt of flazasulfuron can be used, so long as it is agriculturally acceptable. Examples include salts of alkali metals such as sodium and potassium; salts of alkaline earth metals such as magnesium and calcium; salts of amines such as monomethylamine, monoisopropylamine, dimethylamine, diisopropylamine, and triethylamine; and salts of quaternary ammonium bases such as trimethylethylammonium cation and tetramethylammonium cation.

Any salt of glyphosate can be used, so long as it is agriculturally acceptable. Examples include those similar to the salts of flazasulfuron, as well as trialkylsulfonium salts, trialkylsulfoxonium salts, and ammonium salts. Among these, sodium salts (mono-, di-, sesqui-, tri-), ammonium salts, isopropylamine salts and trimethylsulfonium salts are preferable.

Examples of the surfactant include anionic surfactants such as fatty acid salts, alkylsulfosuccinates, polycarboxylates, salts of alkylsulfuric acid esters, alkyl sulfates, alkylaryl sulfates, alkyl diglycol ether sulfates, salts of alcohol sulfuric acid esters, alkyl sulfonates, alkylaryl sulfonates, aryl sulfonates, lignin sulfonates, alkyldiphenyl ether disulfonates, polystyrene sulfonates, salts of alkylphosphoric acid esters, alkylaryl phosphates, styrylaryl phosphates, salts of polyoxyethylene alkyl ether sulfuric acid esters, polyoxyethylene alkylaryl ether sulfates, salts of polyoxyethylene alkylaryl ether sulfuric acid esters, polyoxyethylene alkyl ether phosphates, salts of polyoxyethylene alkyl ether phosphoric acid esters, salts of polyoxyethylene alkylaryl phosphoric acid esters, polyoxyethylene styrylaryl ether sulfates, polyoxyethylene styrylaryl ether phosphates, salts of polyoxyethylene styrylaryl ether phosphoric acid esters, salts of naphthalenesulfonate-formalin condensates, salts of polyacrylic acid, and mixtures of two or more of them. Among these anionic surfactants, alkylsulfosuccinates are preferable and dialkylsulfosuccinates are more preferable.

Also, examples of the surfactant include nonionic surfactants such as polyoxyethylene alkyl ethers, polyoxyethylene alkylaryl ethers, polyoxyethylene alkylaryl ether formaldehyde condensates, polyoxyethylene alkylenearyl ethers, polyoxyalkylene alkyl esters, polyoxyalkylene alkyl sorbitan esters, polyoxyalkylene alkyl sorbitol esters, polyoxyalkylene alkyl glycerol esters, polyoxyalkylene block copolymers, polyoxyalkylene block copolymer alkyl glycerol esters, polyoxyalkylene alkyl sulfonamides, polyoxyalkylene rosin esters, polyoxypropylene block copolymers, polyoxyethylene oleyl ether, polyoxyalkylene alkylphenols, and mixtures of two or more of them.

The stabilizer magnesium oxide is a substance which provides flazasulfuron with storage stability, for example, as a hydrolysis inhibitor which inhibits hydrolysis of flazasulfuron.

In the present invention, various additives can be optionally added. Examples include carriers, acid acceptors, binders and other additives.

Examples of the carriers include diatomaceous silica, slaked lime, calcium carbonate, talc, zieklite, white carbon, bentonite, starch, sodium carbonate, sodium hydrogencarbonate, clay, zeolite, ammonium sulfate, ammonium hydrogensulfate, sodium sulfate, sodium chloride, potassium chloride, and mixtures of two or more of them. Among these carriers, ammonium sulfate is preferable.

In the present invention, when a solid herbicidal composition comprising (1) flazasulfuron or a salt thereof, (2) glyphosate (acid), (3) a surfactant and (4) magnesium oxide is prepared, an acid acceptor can be added to thereby form the corresponding glyphosate salt. Examples of the acid acceptor include inorganic acid salts and organic acid salts of alkali metals (sodium, potassium, etc.) and inorganic acid salts and organic acid salts of ammonium, such as carbonates, bicarbonates, metaborates, tetraborates, acetates, citrates, formates, oxalates, phosphates, tripolyphosphates, metaphosphates, propionates, pyrophosphates, metasilicates, orthosilicates, sulfites and thiosulfates of individual alkali metals and ammonium; hydroxides of alkali metals (sodium, potassium, etc.), such as sodium hydroxide, and potassium hydroxide; and mixtures of two or more of them. Among these acid acceptors, alkali metal carbonates are preferable, and sodium carbonate is more preferable.

Examples of the binders include various gums such as cyamoposis gum, locust bean gum, tragacanth gum, xanthan gum, and gum arabic; alginic acid derivatives such as sodium alginate, ammonium alginate, and propylene glycol alginate; organic polymer compounds such as polyvinyl alcohol, polyvinyl pyrrolidone, polyvinyl methacrylate, polyethylene oxide, polyacrylic acid, sodium polyacrylate and polyacrylamide; animal or vegetable water-soluble proteins such as albumen, albumin, casein, and gelatin; cellulose derivatives such as methylcellulose, carboxymethylcellulose, sodium salt of carboxymethylcellulose, carboxyethylcellulose, hydroxyethylcellulose, hydroxypropylcellulose, and hydroxypropylmethylcellulose; starches such as dextrin, starch, sodium salt of carboxymethylstarch, hydroxyethylstarch, and hydroxypropylstarch; ligninsulfonic acid derivatives such as sodium ligninsulfonate, and calcium ligninsulfonate; and mixtures of two or more of them.

Regarding the contents of the individual ingredients of the solid herbicidal composition according to the present invention, based on 100 parts by weight of the whole solid herbicidal composition, the content of flazasulfuron or a salt thereof is from 0.1 to 30 parts by weight, preferably from 0.1 to 10 parts by weight; the content of glyphosate and salts thereof is from 0.1 to 80 parts by weight, preferably from 0.1 to 60 parts by weight; the content of the surfactant is from 0.1 to 50 parts by weight, preferably from 1 to 40 parts by weight; the content of the magnesium oxide is from 0.1 to 20 parts by weight, preferably from 1 to 15 parts by weight; when the carrier is used, the content thereof is from 0.1 to 80 parts by weight, preferably from 1 to 60 parts by weight; when the acid acceptor is used, the content thereof is from 0.1 to 30 parts by weight, preferably from 1 to 20 parts by weight; and the binder is used, the content thereof is from 0.1 to 20 parts by weight, preferably from 0.5 to 10 parts by weight.

The solid herbicidal composition according to the present invention can be prepared by mixing the ingredients in an optional order (for example, mixing glyphosate with the acid acceptor and then with other ingredients) or simultaneously mixing all ingredients together. Examples of the formulation type include wettable powders, granules, water-dispersible granules, water-soluble powders, water-soluble granules, tablets and packs (packed in water-soluble film, water-soluble paper, etc. or filled in containers made of such materials). The formulation may be prepared in accordance with commonly known methods. For example, granular solid herbicidal compositions such as granules or water-dispersible granules are prepared by mixing the ingredients, kneading the mixture with water, granulating the kneaded matter using an appropriate granulation procedure (extruding granulation, spray dry granulation, fluidized bed granulation, tumbling granulation, agitation granulation, etc.), if necessary, followed by drying and sieving.

Examples of preferred embodiments of the present invention are as follows.
(a) A solid herbicidal composition, comprising flazasulfuron or a salt thereof, glyphosate or a salt thereof, a surfactant, and magnesium oxide.
(b) A solid herbicidal composition, comprising flazasulfuron or a salt thereof, glyphosate or a salt thereof, a surfactant, magnesium oxide, and a carrier.
(c) A solid herbicidal composition, comprising flazasulfuron or a salt thereof, glyphosate (acid), a surfactant, magnesium oxide, and an acid acceptor.
(d) A solid herbicidal composition, comprising flazasulfuron or a salt thereof, glyphosate (acid), a surfactant, magnesium oxide, an acid acceptor, and a carrier.
(e) The solid herbicidal composition according to any one of (a) to (d), which is in the granular form.
(f) The solid herbicidal composition according to any one of (a) to (d), which is in the form of a wettable powder.
(g) The solid herbicidal composition according to any one of (a) to (d), which is in the form of water-dispersible granules.
(h) The solid herbicidal composition according to any one of (a) to (d), which is in the form of a water-soluble powder.
(i) The solid herbicidal composition according to any one of (a) to (d), which is in the form of water-soluble granules.

Moreover, it is possible to inhibit growth of an undesirable plant by using the solid herbicidal composition according to the present invention. The term "undesirable plant" as used herein means, for example, a plant providing field crops with undesirable effects. The growth of the plant can be selectively inhibited by applying the solid herbicidal composition according to the present invention,

### BEST MODE FOR CARRYING OUT THE INVENTION

The present invention are described in detail by reference to the following examples. However, the present invention is not limited thereto. First, Formulation Examples are described below.

### Formulation Example 1

| | |
|---|---|
| Flazasulfuron (purity: 95.1%) | 1.54 g |
| Glyphosate (purity: 87.9%) | 34.40 g |
| GEROPON SDS | 5.00 g |
| Magnesium oxide | 5.00 g |
| Ammonium sulfate | 44.84 g |
| Sodium carbonate | 11.38 g |

The above ingredients were mixed together and then kneaded with 10 g of water. The kneaded mixture was granulated with a busket type extruding granulator (screen size: 0.8 mmφ), dried on a fluidized bed and then sieved (14-60 mesh) to give 100 g of water-dispersible granules.

### Comparative Formulation Example 1

| | |
|---|---|
| Flazasulfuron (purity: 97.5%) | 1.54 g |
| Glyphosate (purity: 87.9%) | 33.74 g |
| GEROPON SDS | 5.00 g |
| Ammonium sulfate | 45.56 g |
| Sodium carbonate | 11.16 g |

The above ingredients were mixed together and then kneaded, granulated, dried and sieved as in the above Formulation Example 1 to give 100 g of water-dispersible granules.

### Comparative Formulation Example 2

| | |
|---|---|
| Flazasulfuron (purity: 95.1%) | 1.54 g |
| Glyphosate (purity: 87.9%) | 34.40 g |
| GEROPON SDS | 5.00 g |
| Ammonium sulfate | 49.84 g |
| Sodium carbonate | 11.38 g |

The above ingredients were mixed together and then kneaded, granulated, dried and sieved as in the above Formulation Example 1 to give 100 g of water-dispersible granules.

Next, Test Example is described below.

### Test Example 1

### Storage stability test of flazasulfuron:

About 30 g of the water-dispersible granules obtained in Formulation Example 1 and Comparative Formulation Examples 1 and 2 were put into screw-capped glass sample bottles and stored under various acceleration test conditions. Then, the samples were analyzed by liquid chromatography to determine the decomposition rates of flazasulfuron. The results are shown in Table 1.

**Table 1**

| Formulation Example No. | Decomposition rate (%) of flazasulfuron | | |
|---|---|---|---|
| | 60°C, 1 week | 54°C, 2 weeks | 40°C, 1 month |
| 1 | - | 11 | - |
| Comparative Formulation Example 1 | 45 | 27 | 11 |
| Comparative Formulation Example 2 | - | 20 | - |

### INDUSTRIAL APPLICABILITY

As described above, the present invention provides stable solid herbicidal compositions.

## Claims

1. The use of magnesium oxide as a stabilizer to inhibit hydrolysis of flazasulfuron in a solid herbicidal composition comprising:
(1) 1-(4,6-dimethoxypyrimidin-2-yl)-3-(3-trifluoromethyl-2-pyridylsulfonyl)urea or a salt thereof;
(2) N-(phosphonomethyl)glycine and/or salts thereof
(3) a surfactant; and
(4) magnesium oxide.

## Patentansprüche

1. Verwendung von Magnesiumoxid als Stabilisator, um die Hydrolyse von Flazasulfuron in einer festen herbiziden Zusammensetzung zu hemmen, umfassend:
(1) 1-(4,6-Dimethoxypyrimidin-2-yl)-3-(3-trifluormethyl-2-pyridylsulfonyl)harnstoff oder ein Salz davon;
(2) N-(Phosphonomethyl)glycin, und/oder Salze davon;
(3) ein Tensid; und
(4) Magnesiumoxid.

## Revendications

1. Utilisation d'oxyde de magnésium comme stabilisant pour inhiber l'hydrolyse du flazasulfuron dans une composition herbicide solide, comprenant :
(1) de la 1-(4,6-diméthoxypyrimidin-2-yl)-3-(3-trifluorométhyl-2-pyridylsulfonyl)urée ou un de ses sels ;
(2) de la N-(phosphonométhyl)glycine et/ou ses sels ;
(3) un tensioactif ; et
(4) de l'oxyde de magnésium.
